# EUROPEAN PATENT APPLICATION

(11) **EP 4 822 146 A1**
(43) Date of publication of application: **14.10.2026**
(21) Application number: 26167705.8
(22) Date of filing: 25.03.2026
(51) Int. Cl.: F01D 25/26, F01D 25/16, F01D 25/24

(54) **REINFORCEMENT ASSEMBLY FOR GAS TURBINE BEARING HOUSING**

(30) Priority: 07.04.2025 US 202519172470
(71) Applicant: GE Vernova Technology GmbH, 5400 Baden (CH)
(72) Inventor: BLACK, Kenneth Damon, Greenville, 29615 (US); BENSON, Kyle Eric, Greenville, 29615 (US); MCCANN, Corey, Greenville, 29615 (US); GESSNER, William, Greenville, 29615 (US)
(74) Representative: Freigutpartners IP Law Firm

(57) **Abstract**

A system (10) includes an inlet portion (42) of a gas turbine system (18). The inlet portion (42) includes an inlet casing (110). The inlet casing (110) includes an inlet casing portion (118) and an additional inlet casing portion (116) removably coupled to the inlet casing portion (118). The inlet portion (42) also includes a bearing housing (112) having a bearing housing portion (152) disposed between the inlet casing portion (118) and the additional inlet casing portion (116). The bearing housing portion (152) is removably coupled to the inlet casing portion (118), and the bearing housing (112) is configured to house a bearing (158, 160) configured to at least partially support a rotor (60). The inlet portion (42) also includes a reinforcement assembly (114) extending axially between a surface (348) of the bearing housing portion (152) and a surface (172) of the additional inlet casing portion (116). The reinforcement assembly (114) is configured to transfer a rotor axial load from the bearing housing portion (152) to the additional inlet casing portion (116).

## Description

### BACKGROUND

The subject matter disclosed herein generally relates to a reinforcement assembly for a bearing housing of a gas turbine system (e.g., a bearing housing at an inlet end of a compressor of the gas turbine system) and to a system comprising such a reinforcement assembly. More in particular, the herein claimed invention relates to the subject matter set forth in the claims.

Gas turbine engines are subjected to axial loads at least partially due to gases traveling through the gas turbine engine and gases being expelled from an exhaust of the gas turbine engine. These axial loads may act on a shaft of the gas turbine engine in an aft direction of the gas turbine engine or a forward direction of the gas turbine engine. Thrust bearings are commonly used to support the rotor shaft and to accommodate loads in both the aft and forward directions. If the rotor shaft and bearing become misaligned, the thrust bearings may experience uneven loading or overloading. As a result, the force exerted on the rotor shaft may result in an increased rate of wear on components of the thrust bearings.

### BRIEF DESCRIPTION

The invention as herein claimed relates to the subject matter set forth in the claims. Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the presently claimed embodiments may encompass a variety of forms that may be similar to or different from the embodiments set forth below.

In certain embodiments, a system includes an inlet portion of a gas turbine system. The inlet portion includes an inlet casing. The inlet casing includes a first inlet casing portion and a second inlet casing portion, wherein the a first inlet casing portion is removably coupled to the second inlet casing portion. The second inlet casing portion may hereinafter also be referred to as "the inlet casing portion" and the first inlet casing portion may hereinafter also be referred to as "the additional inlet casing portion" The inlet portion also includes a bearing housing having a bearing housing portion disposed between the inlet casing portion and the additional inlet casing portion. The bearing housing portion is removably coupled to the inlet casing portion, and the bearing housing is configured to house a bearing configured to at least partially support a rotor. The inlet portion also includes a reinforcement assembly extending axially between a surface of the bearing housing portion and a surface of the additional inlet casing portion. The reinforcement assembly is configured to transfer a rotor axial load from the bearing housing portion to the additional inlet casing portion.

In certain embodiments, a reinforcement assembly for an inlet portion of a gas turbine system includes a body portion configured to couple to a bearing housing portion of a bearing housing of the inlet portion. The bearing housing is configured to house a bearing, and the bearing is configured to at least partially support a rotor. The reinforcement assembly also includes an arm movably coupled to the body portion. The arm is configured to move relative to the body portion. The inlet portion includes an inlet casing. The inlet casing includes an inlet casing portion and an additional inlet casing portion removably coupled to the inlet casing portion. The body portion and the arm are configured to transfer a rotor axial load from the bearing housing portion to the additional inlet casing portion. The bearing housing portion is configured to be disposed between the inlet casing portion and the additional inlet casing portion.

In certain embodiments, a system includes a controller having a memory and a processor. The controller is configured to receive, via the processor, a signal indicative of a load between a bearing housing of an inlet portion of a gas turbine system and a rotor partially disposed within the bearing housing. The controller is also configured to control, via the processor, an actuator of a reinforcement assembly to drive an arm of the reinforcement assembly to extend based on the load. The inlet portion includes an inlet casing. The inlet casing includes an inlet casing portion and an additional inlet casing portion removably coupled to the inlet casing portion. The arm is movably coupled to a body of the reinforcement assembly. The body is configured to couple to a bearing housing portion of the bearing housing. The arm is configured to engage the additional inlet casing portion. The inlet casing is disposed about the bearing housing portion.

### BRIEF DESCRIPTION OF THE DRAWINGS

These and other features, aspects, and advantages of the presently disclosed techniques will become better understood when the following detailed description is read with reference to the accompanying drawings in which like characters represent like parts throughout the drawings, wherein:
FIG. 1 is a schematic view of an embodiment of a power generation system, in accordance with embodiments described herein;
FIG. 2 is a perspective view of an embodiment of an inlet of a gas turbine system that may be employed within the powertrain system of FIG. 1, in accordance with embodiments described herein;
FIG. 3 is a closeup view taken within area 3-3 in FIG. 2 of an embodiment of a reinforcement assembly of the inlet of the gas turbine system, in accordance with embodiments described herein;
FIG. 4 is a side cross-sectional view taken along line 4-4 in FIG. 2 of an embodiment of the reinforcement assembly, in accordance with embodiments described herein;
FIG. 5 is a side cross-sectional view taken along line 4-4 in FIG. 2 of an embodiment of the reinforcement assembly, in which the reinforcement assembly includes an actuator, in accordance with embodiments described herein;
FIG. 6 is a side cross-sectional view taken along line 4-4 in FIG. 2 of an embodiment of the reinforcement assembly, in which the reinforcement assembly includes a pair of actuators, in accordance with embodiments described herein; and
FIG. 7 is a block diagram of an embodiment of a control system for controlling actuator(s) of the reinforcement assembly, in accordance with embodiments described herein.

### DETAILED DESCRIPTION

One or more specific embodiments of the presently disclosed systems and methods are described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the presently disclosed embodiments, the articles "a," "an," "the," and "said" are intended to mean that there are one or more of the elements. The terms "comprising," "including," and "having" are intended to be inclusive and mean that there may be additional elements other than the listed elements.

The present disclosure is generally directed to a reinforcement assembly used to increase a stiffness between a bearing housing of an inlet portion of a gas turbine system and an inlet casing portion of the inlet portion. In particular, the present disclosure is directed to embodiments of the reinforcement assembly. In certain embodiments, the reinforcement assembly includes arms that extend relative to a body of the reinforcement assembly. The body is mounted to a bearing housing portion of the bearing housing, and the arms press against the inlet casing portion, thereby improving alignment between the shaft and the thrust bearing and increasing a stiffness between the bearing housing portion and the inlet casing portion. The improved alignment and/or increased stiffness provide for more uniform distribution of a load around the thrust bearing , thereby reducing the likelihood of a section of the thrust bearing becoming overloaded. Such overload, if left unchecked, could result in yielding and/or deformation of the thrust bearing pad material or wear on the bearing components. In certain embodiments, the reinforcement assembly may include an actuator configured to extend and/or retract one or more arms from the body of the reinforcement assembly, thereby adjusting the stiffness between the bearing housing portion and the inlet casing portion. The actuator may be controlled based on signals received from one or more sensors indicative of a load between the bearing components and the shaft and/or a temperature proximate to an interface between the bearing components and the shaft.

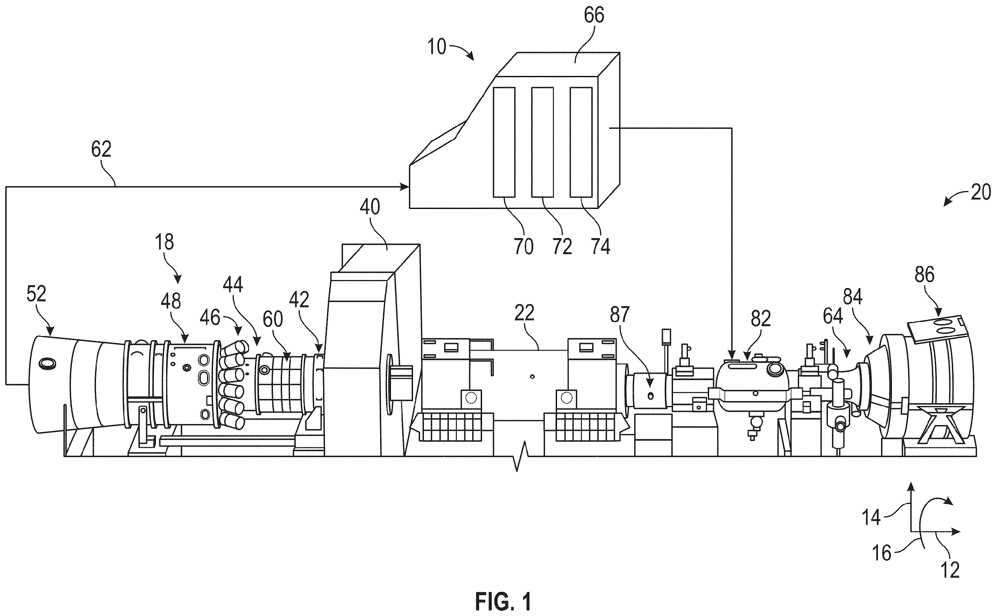

FIG. 1 is a schematic view of an embodiment of a power generation system 10 (e.g., combined cycle system, simple cycle system, powertrain system, etc.). In the illustrated embodiment, the power generation system 10 is a combined cycle system. The power generation system 10 may be described in reference to an axial direction or axis 12, a vertical/radial direction or axis 14, and a circumferential direction or axis 16. In the illustrated embodiment, the power generation system 10 includes a gas turbine engine 18, a generator 22, and, in the case of a combined cycle system, an energy recovery system 20. The gas turbine engine 18 includes an air intake 40, an inlet 42 (e.g., inlet portion), a compressor 44 having one or more compressor stages, one or more combustors 46, an expansion turbine 48 having one or more turbine stages, and an exhaust section 52. In operation, the compressor 44 receives air from the air intake 40, and compresses the air and/or exhaust gas 62 in one or more compressor stages (e.g., stages of rotating compressor blades). The combustors 46 then combust fuel from a fuel supply system with the compressed air and/or exhaust gas, and generate hot combustion gases. The hot combustion gases expand and drive one or more turbine stages (e.g., stages of rotating turbine blades) in the turbine 48, thereby driving rotation of the compressor 44 and the generator 22 via a shaft 60 (e.g., rotor). The turbine 48 then outputs the hot combustion gases as the exhaust gas 62. The gas turbine engine 18 may include a variety of piping to support the flow of intake air, compressed air (e.g., bleed air), one or more fuels (e.g., liquid fuel, gas fuel, etc.), additives for combustion, exhaust gas (e.g., exhaust gas recirculation), other fluids, or a combination thereof.

The energy recovery system 20 includes a steam turbine system 64 and a heat recovery steam generator (HRSG) 66. The HRSG 66 recovers waste heat from the exhaust gas 62 to generate steam for driving the steam turbine system 64. The HRSG 66 typically includes a high-pressure (HP) steam section 70, an intermediate-pressure (IP) steam section 72, and a low-pressure (LP) steam section 74. As shown, the steam turbine system 64 includes an HP steam turbine 82, an IP steam turbine 84, and an LP steam turbine 86. In operation, the steam turbine system 64 drives the electrical generator 22 via a shaft 87 (e.g., rotor). In the case of a simple cycle system, the energy recovery system 20 is omitted, and the exhaust gas 62 is dispelled through an exhaust stack (not shown) downstream of the expansion turbine 48.

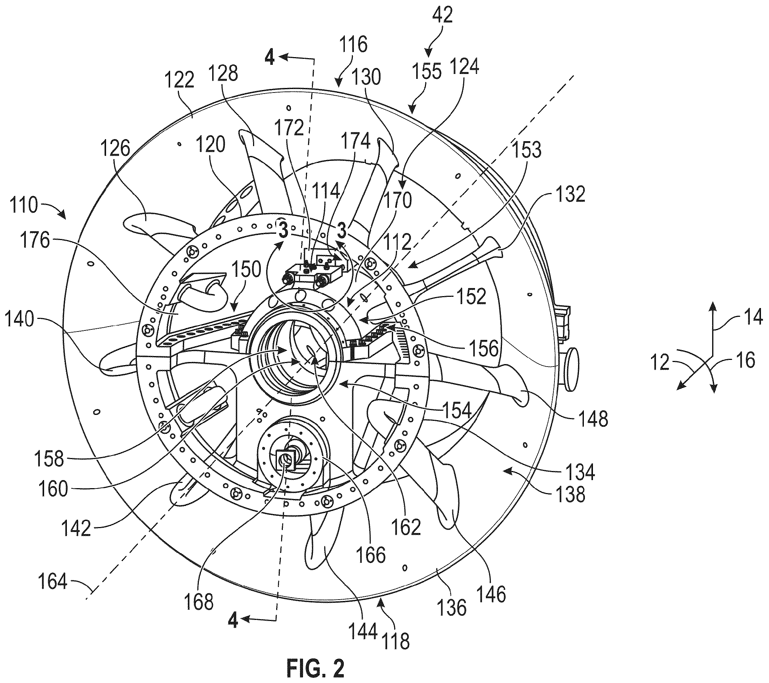

FIG. 2 is a perspective view of an embodiment of an inlet 42 (e.g., inlet portion) of a gas turbine engine 18that may be employed within the power generation system 10 of FIG. 1. As shown, the inlet 42 includes an inlet casing 110, a bearing housing 112, and a reinforcement assembly 114. The inlet casing 110 includes a first inlet casing portion 116 (e.g., additional inlet casing portion, upper casing portion) and a second inlet casing portion 118 (e.g., inlet casing portion, lower casing portion). As shown, the first inlet casing portion 116 includes a first inner wall 120 (e.g., first semi-annular inner wall) and a first outer wall 122 (e.g., first semi-annular outer wall). First struts 124 (e.g., first struts 126, 128, 130, 132) radially extend from the first inner wall 120 to the first outer wall 122, thereby coupling the first inner wall 120 to the first outer wall 122. The second inlet casing portion 118 includes a second inner wall 134 (e.g., second semi-annular inner wall) and a second outer wall 136 (e.g., second semi-annular outer wall). Second struts 138 (e.g., second struts 140, 142, 144, 146, 148) radially extend from the second inner wall 134 to the second outer wall 136, thereby coupling the second inner wall 134 to the second outer wall 136.

As shown, the first inlet casing portion 116 is coupled (e.g., removably coupled) to the second inlet casing portion 118 via inlet fasteners 150 (e.g., threaded fasteners). The first inlet casing portion 116 is removably coupled to the second inlet casing portion 118 to provide access (e.g., for maintenance) to the bearing housing 112. In the illustrated embodiment, the first inner wall 120 is configured to couple to the second inner wall 134 to form an inner annular casing wall 153, and the first outer wall 122 is configured to couple to the second outer wall 136 to form an outer annular casing wall 155. In the illustrated embodiment, the first inlet casing portion 116 is disposed above the second inlet casing portion 118 with respect to the vertical direction 14. In certain embodiments, the positions of the first inlet casing portion 116 and the second inlet casing portion 118 may be switched.

In the illustrated embodiment, the bearing housing 112 is disposed between (e.g., enclosed by) the first inlet casing portion 116 and the second inlet casing portion 118. As shown, the bearing housing 112 includes a first bearing housing portion 152 and a second bearing housing portion 154. In the illustrated embodiment, the second bearing housing portion 154 and the second inlet casing portion 118 are fabricated as a single piece (e.g., integral). However, in certain embodiments, the second bearing housing portion 154 may be directly coupled to the second inlet casing portion 118 (e.g., non-integral). As shown, the first bearing housing portion 152 is coupled (e.g., removably coupled) to the second bearing housing portion 154 and to the second inlet casing portion 118 via bearing fasteners 156 (e.g., threaded fasteners). The first bearing housing portion 152 is removably coupled to the second bearing housing portion 154 to provide access (e.g., for maintenance) to one or more thrust bearings 158, one or more journal bearings 160, or both, disposed inside the bearing housing 112. In the illustrated embodiment, the first bearing housing portion 152 is disposed between the first inlet casing portion 116 and the second inlet casing portion 118.

The bearing housing 112 includes a borehole 162 (e.g., circular borehole) configured to at least partially retain the shaft 60 shown in FIG. 1. As shown, the bearing housing 112 is configured to house the one or more thrust bearings 158, the one or more journal bearings 160, or both. The one or more thrust bearings 158 may be configured to at least partially constrain the shaft 60 in the axial direction 12, and the one or more journal bearings 160 may be configured to at least partially constrain the shaft 60 in the radial direction 14. In the illustrated embodiment, the borehole 162, the inner annular casing wall 153, and the outer annular casing wall 155 share a common longitudinal central axis 164. That is, the borehole 162 is concentric with the inner annular casing wall 153 and the outer annular casing wall 155. In certain embodiments, the borehole 162 may not be concentric with the inner annular casing wall 153 and/or the outer annular casing wall 155.

In the illustrated embodiment, the second bearing housing portion 154 includes an annular flange 166 disposed about a lubricant inlet 168 (e.g., lubricant nozzle). As shown, the annular flange 166 and the lubricant inlet 168 are disposed in the second bearing housing portion 154, between the borehole 162 and the second inner wall 134. The lubricant inlet 168 is fluidly coupled to a lubricant channel, which is configured to provide lubricant to the one or more thrust bearings 158 and/or the one or more journal bearings 160.

As shown, the reinforcement assembly 114 is disposed on an outer surface 170 (e.g., outer radial surface) of the first bearing housing portion 152. Additionally, the reinforcement assembly 114 is engaged with the first inlet casing portion 116. In the illustrated embodiment, the reinforcement assembly 114 is engaged with an inner axial surface 172 of a protrusion 174 that protrudes from an inner radial surface 176 of the first inner wall 120 of the first inlet casing portion 116. As discussed herein, the reinforcement assembly 114 is configured to transfer a load (e.g., rotor axial load) from the first bearing housing portion 152 to the first inlet casing portion 116 of the inlet casing 110. Although the inlet 42 includes one reinforcement assembly 114 in the illustrated embodiment, in certain embodiments, the inlet 42 may include multiple reinforcement assemblies 114 disposed circumferentially about the outer surface 170 of the first bearing housing portion 152. The multiple reinforcement assemblies 114 may be configured to engage with the protrusion 174, which is extended circumferentially.

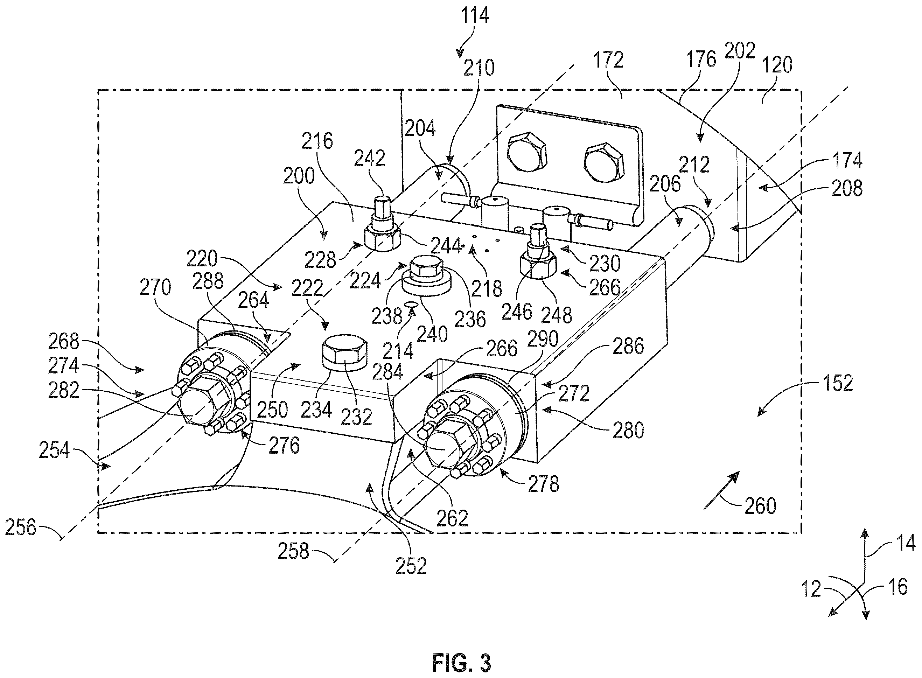

FIG. 3 is a closeup view taken within area 3-3 in FIG. 2 of an embodiment of the reinforcement assembly 114 of the inlet of the gas turbine system. In the illustrated embodiment, the reinforcement assembly 114 includes a body 200 (e.g., body portion) and one or more arms 202 (e.g., first arm 204, second arm 206) slidably coupled (e.g., threaded) to the body 200. As shown, distal ends 208 (e.g., first distal end 210, second distal end 212) of the arms 202 (e.g., rods) are configured to press against (e.g., abut) the inner axial surface 172 of the protrusion 174 that protrudes from the inner radial surface 176 of the first inner wall 120 of the first inlet casing portion. The distal ends 208 (e.g., end portions) of the arms 202 pressing against the inner axial surface 172 may transfer a load from the first bearing housing portion 152 to the first inlet casing portion.

In the illustrated embodiment, the body 200 includes a lifting hole 214 extending from a top surface 216 of the body 200. In certain embodiments, the lifting hole 214 may be used to lift (e.g., disengage) the reinforcement assembly 114 from the first bearing housing portion 152. The body 200 also includes mounting holes 218 for mounting one or more sensors (e.g., vibration sensors) to the body 200. As shown, the body 200 of the reinforcement assembly 114 is coupled to the first bearing housing portion 152 via fasteners 220. The fasteners 220 include a forward fastener 222 and an emergency load restraining fastener 224. Leveling fasteners 226 (e.g., first leveling fastener 228, second leveling fastener 230) are configured to adjust the orientation of the body 200 relative to the first bearing housing portion 152. In the illustrated embodiment, the forward fastener 222 includes a forward bolt 232 and a forward lock washer 234 disposed about the forward bolt 232. The emergency load restraining fastener 224, which is centrally located within the body 200, includes an emergency load restraining bolt 236, an emergency load restraining lock washer 238 disposed about the emergency load restraining bolt 236, and a compression sleeve 240 disposed about the emergency load restraining bolt 236. The first leveling fastener 228 includes a first leveling pin 242 and a first leveling pin jam nut 244 disposed about the first leveling pin 242. The second leveling fastener 230 includes a second leveling pin 246 and a second leveling pin jam nut 248 disposed about the second leveling pin 246. In certain embodiments, the body 200 and the first bearing housing portion 152 may be a single piece, and one or more of the fasteners 220 and/or the leveling fasteners 226 may be omitted.

In the illustrated embodiment, the body 200 includes an overhang portion 250 coupled to a raised portion 252 of the first bearing housing portion 152 via the forward fastener 222. As discussed herein, the body 200 pushes against the raised portion 252, thereby providing transfer of a load from the first bearing housing portion 152 to the first inlet casing portion.

As shown, the arms 202 pass through the body 200 such that central axes 254 (first central axis 256, second central axis 258) of the arms 202 are oriented in a direction 260. The arms 202 are positioned laterally (e.g., circumferentially) outward from lateral sides 262 (e.g., first lateral side 264, second lateral side 266) of the overhang portion 250 of the body. As shown, the arms 202 are coupled to the body 200 via jam nuts 268 (e.g., first jam nut 270, second jam nut 272) and fasteners 274 (e.g., first fasteners 276, second fasteners 278) that engage the jam nuts 268 (e.g., SUPERBOLT^{™} jam nuts) and the body 200. The arms 202 are also coupled to the body 200 via an engagement between threading (e.g., outer threads) formed into the arms 202 and threading (e.g., inner threading) formed into the body 200. As shown, the first fasteners 276 are arrayed about the first arm 204 and engage the first jam nut 270, and the second fasteners 278 are arrayed about the second arm 206 and engage the second jam nut 272. The jam nuts 268 and fasteners 274 securely fasten the arms 202 to the body 200 after the arms 202 are set to a pre-determined torque and/or compressive preload, thereby enabling the arms 202 to maintain the pre-determined torque and/or compressive preload over an extended period. For example, the arms 202 may be torqued by using a tool to turn hex heads 280 (e.g., first hex head 282, second hex head 284) to engage the threading of the arms 202 with the threading of the body 200. Once a desired load is applied by the arms 202 to the protrusion 174, the fasteners 274 may be tightened, thereby pressing against washers 286 (e.g., first washer 288, second washer 290). The washers 286 exert an axial load on the body 200 in the direction 260, thereby securing the arms 202 to the body 200 while maintaining the predetermined load on the protrusion 174.

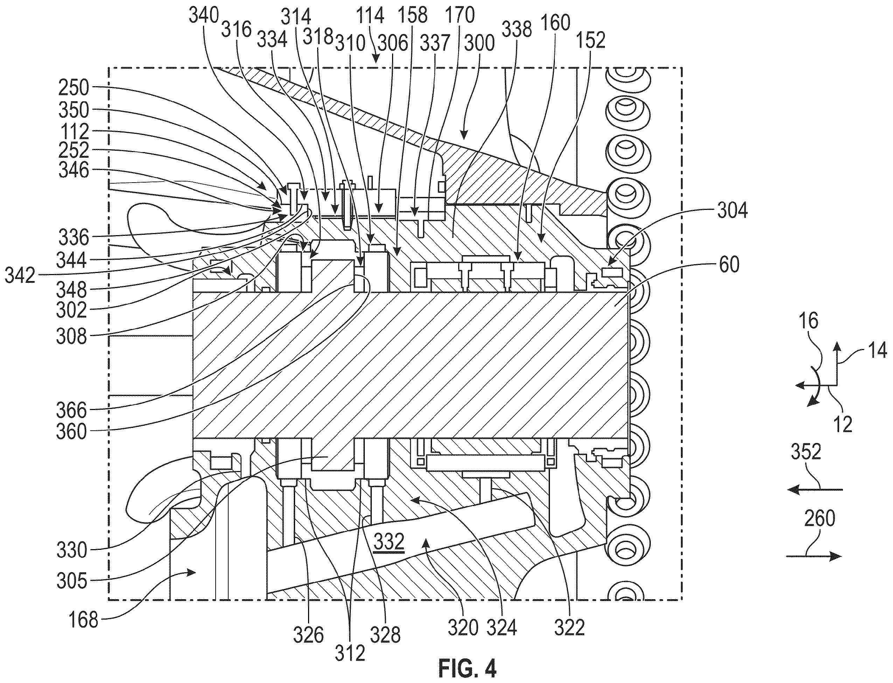

FIG. 4 is a side cross-sectional view taken along line 4-4 in FIG. 2 of an embodiment of the reinforcement assembly 114. As shown, the bearing housing 112 is disposed about the shaft 60, a thrust bearing 158 (e.g., oil film bearing), a journal bearing 160, and bushings 300 (e.g., first bushing 302, second bushing 304). The thrust bearing 158, the journal bearing 160, and the bushings 300 are disposed about the shaft 60. The shaft 60 includes a collar 305 (e.g., radial collar) that extends into the thrust bearing 158. As shown, the thrust bearing 158 includes thrust bearing portions 306 (e.g., first thrust bearing portion 308, second thrust bearing portion 310). The thrust bearing portions 306 are axially disposed on axial sides 312 of the collar 305. The thrust bearing portions 306 include bearing pads 314 (e.g., first bearing pads 316, second bearing pads 318) circumferentially arrayed about the respective thrust bearing portions 306. As shown, the bearing pads 314 are configured to interface with the collar 305, thereby at least partially restraining the shaft 60 along the axial direction 12.

In the illustrated embodiment, the bearing housing 112 includes a main passage 320 (e.g., oil passage) integrally formed into the bearing housing 112. As shown, the main passage 320 is fluidly coupled to the lubricant inlet 168. The main passage 320 is also fluidly coupled to the journal bearing 160 via a first passage 322, and to the thrust bearing 158 via passages 324 (e.g., second passage 326, third passage 328). The main passage 320 is also fluidly coupled to the first bushing 302 via a fourth passage 330. The main passage 320 is configured to carry a lubricant 332 (e.g., oil, mineral oil, synthetic oil, etc.) to the thrust bearing 158, the journal bearing 160, and the first bushing 302. The lubricant 332 may be pressurized to form a lubricant film between the thrust bearing 158 and the shaft 60, as well as between the journal bearing 160 and the shaft 60. The pressurized lubricant 332 reduces friction between the shaft 60 and the thrust bearing 158, the journal bearing 160, and the first bushing 302.

As shown, the raised portion 252 of the first bearing housing portion 152 protrudes above the outer surface 170 of the first bearing housing portion 152. The body 200 of the reinforcement assembly 114 includes the overhang portion 250, which protrudes from a main body portion 334 of the body 200 and forms a recess 336 configured to interface with the raised portion 252. In certain embodiments, the raised portion 252 may be formed via machining a trough 337 (e.g., space, gap, channel, etc.) into a bearing housing wall 338 of the bearing housing 112. As shown, the recess 336 is machined into the body 200 of the reinforcement assembly 114 such that surfaces 340 (e.g., first surface 342, second surface 344) of the reinforcement assembly 114 interface with surfaces 346 (e.g., third surface 348, fourth surface 350) of the raised portion 252. Because the surfaces 340 of the body 200 and the surfaces 346 of the first bearing housing portion 152 are machined, the contact area between the surfaces is enhanced (e.g., as compared to surfaces formed by casting), thereby reducing the stress at the interface and evenly distributing the load.

An abutment between the first surface 342 of the reinforcement assembly 114 and the third surface 348 of the raised portion 252 causes the reinforcement assembly 114 to push against the raised portion 252 in the direction 352 in response to the arms 202 of the reinforcement assembly 114 pushing against the first inlet casing portion 116 in the direction 260 Accordingly, the reinforcement assembly 114 reduces movement of the first bearing housing portion 152 toward the first inlet casing portion 116 in the direction 260, thereby increasing the stiffness (e.g., axial stiffness) of the first bearing housing portion 152. By increasing the stiffness between the bearing housing 112 and the first inlet casing portion 116 via the reinforcement assembly 114, stress distribution between first outer axial surface 360 of the collar 305 and first inner axial surface 366 of the bearing pads 314 is substantially equalized about the circumferential axis 16, thereby reducing wear on the bearing pads 314.

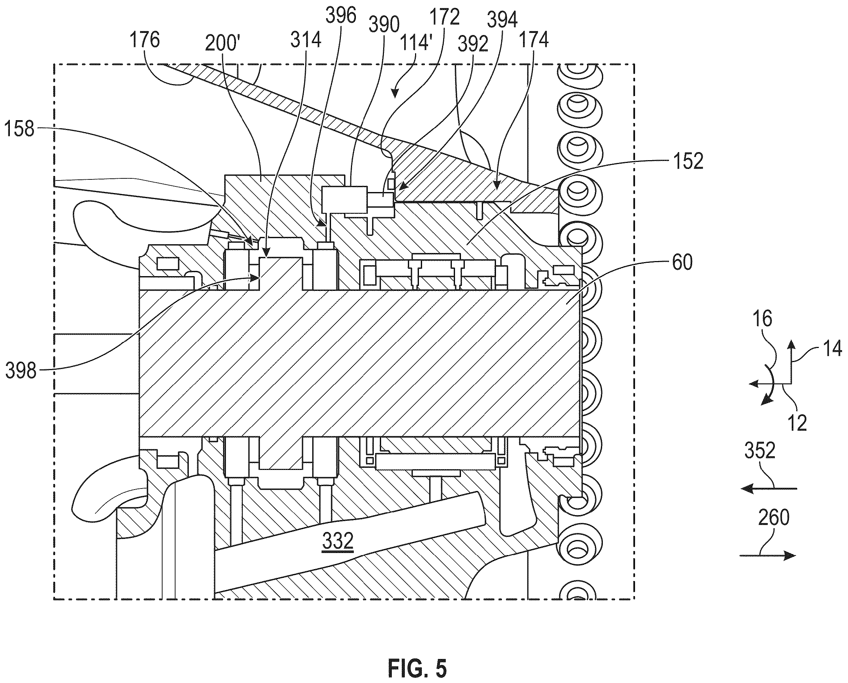

FIG. 5 is a side cross-sectional view taken along line 4-4 in FIG. 2 of an embodiment of the reinforcement assembly 114', in which the reinforcement assembly 114' includes an actuator 390. In the illustrated embodiment, the body 200' and the first bearing housing portion 152 are formed as a single piece. As shown, the reinforcement assembly 114' includes the actuator 390, which is coupled to the body 200'. The reinforcement assembly 114' also includes an arm 392 (e.g., rod, cylinder), which is slidably coupled to the actuator 390 and configured to extend in the direction 260 and/or retract in the direction 352 relative to the body 200'. As shown, an end portion 394 of the arm 392 is configured to press against (e.g., abut) the inner axial surface 172 of the protrusion 174 that protrudes from the inner radial surface 176 of the first inner wall 120 of the first inlet casing portion 116. Although the reinforcement assembly 114' includes one actuator 390 and corresponding arm 392 in the illustrated embodiment, in certain embodiments, the reinforcement assembly 114' may include more than one actuator 390 and corresponding arm 392. In certain embodiments, the actuator 390 includes a hydraulic actuator (e.g., hydraulic piston, hydraulic linear actuator, etc.), which may receive the lubricant 332 from the thrust bearing 158 via a channel 396. In certain embodiments, a pump (not shown) may be used to drive the lubricant 332 from the thrust bearing 158 to the actuator 390. The pressurized lubricant 332 within the actuator 390 may drive the arm 392 to extend in the direction 260.

In certain embodiments, the actuator 390 may be communicatively coupled (e.g., via a valve assembly) to a controller having a memory and a processor. The controller may be configured to receive a first signal from one or more sensors (e.g., one or more load cells) indicative of a load between the shaft 60 and the thrust bearing 158 (e.g., the bearing pads 314). The controller may also be configured to receive a second signal from one or more sensors (e.g., one or more load cells) indicative of a load between the reinforcement assembly 14 (e.g., the arms 302) and the inner axial surface 172 of the protrusion 174 that protrudes from the inner radial surface 176 of the first inner wall 120 of the first inlet casing portion 116. Additionally, or alternatively, the controller may be configured to receive a third signal from one or more sensors (e.g., temperature sensors, thermocouples, etc.) indicative of a temperature at an interface 398 between the shaft 60 and the thrust bearing 158 (e.g., the bearing pads 314). A temperature at the interface 398 may increase as the load between the shaft 60 and the thrust bearing 158 increases. As discussed herein, the controller may be configured to control the actuator 390 based on the first signal, the second signal, the third signal, or a combination thereof.

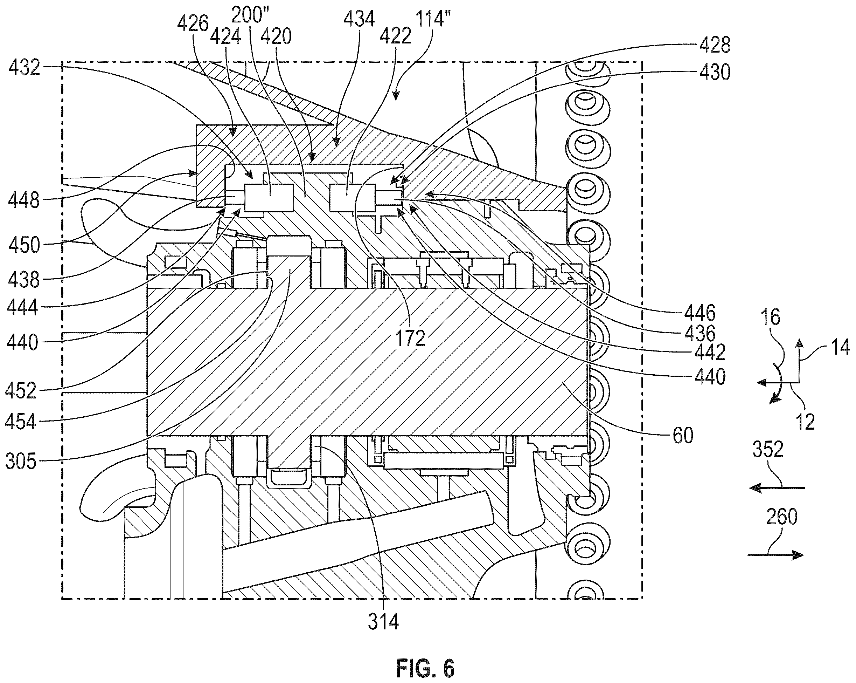

FIG. 6 is a side cross-sectional view taken along line 4-4 in FIG. 2 of an embodiment of the reinforcement assembly 114", in which the reinforcement assembly 114" includes a pair of actuators 420 (e.g., first actuator 422, second actuator 424). In the illustrated embodiment, the first inlet casing portion 116 includes a protrusion 426 that extends partially around the reinforcement assembly 114". As shown, the actuators 420 are positioned at opposing axial sides 428 (e.g., first axial side 430, second axial side 432) of the body 200". The reinforcement assembly 114" includes arms 434 (e.g., first arm 436, second arm 438) coupled to the actuators 420. That is, the first arm 436 is coupled to the first actuator 422, and the second arm 438 is coupled to the second actuator 424. The arms 434 are configured to extend and/or retract relative to the body 200".

As shown, distal ends 440 (e.g., first distal end 442, second distal end 444) of the arms 434 are configured to abut respective surfaces 446 (e.g., inner axial surface 172, inner axial surface 448) of the first inlet casing portion 116. In the illustrated embodiment, the distal end 442 of the first arm 436 is configured to abut the inner axial surface 172 of the protrusion 174, and the distal end 444 of the second arm 438 is configured to abut the inner axial surface 448 of the protrusion 426. As shown, the first arm 436 is configured to extend to exert a load onto the inner axial surface 172 of the protrusion 174 in the direction 260, and the second arm 438 is configured to extend to exert a load onto the inner axial surface 448 in the direction 352. As shown, the direction 260 is opposite the direction 352. As discussed herein, the controller may be configured to control any combination of the actuators 420. Additionally, the controller may be configured to control the actuators 420 independently. That is, the control of the first actuator 422 may be independent of the control of the second actuator 424, and the control of the second actuator 424 may be independent of the control of the first actuator 422. For example, the controller may instruct the first actuator 422 to extend while concurrently instructing the second actuator 424 to retract. Additionally, or alternatively, the controller may instruct the second actuator 424 to extend while concurrently instructing the first actuator 422 to retract.

In certain embodiments, the second actuator 424 drives the second arm 438 to press against the surface 448, thereby enabling the reinforcement assembly 114" to reduce movement of the first bearing housing portion 152 toward a closed end portion 450 of the protrusion 426 in the direction 352. By increasing the stiffness between the bearing housing 112 and the closed end portion 450 of the protrusion 426 (e.g., first inlet casing portion 116) via the reinforcement assembly 114", stress distribution between a second outer axial surface 452 of the collar 305 of the shaft 60 and a second inner axial surface 454 of the bearing pads 314 is substantially equalized about the circumferential axis 16, thereby reducing wear on the bearing pads 314.

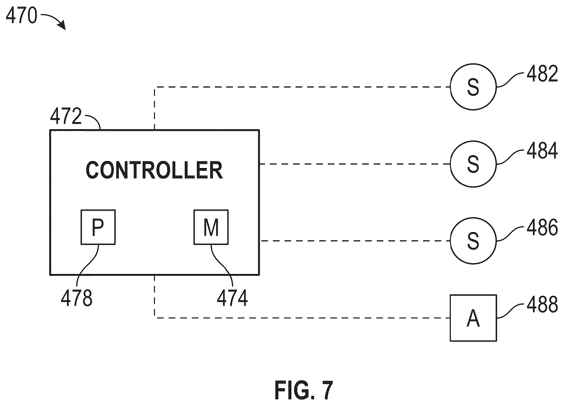

FIG. 7 is a block diagram of an embodiment of a control system 470 for controlling actuator(s) of the reinforcement assembly 114, 114', 114". In the illustrated embodiment, the control system 470 includes a controller 472 having a memory 474 and a processor 478. In certain embodiments, the controller 472 is communicatively coupled to one or more first sensors 482 (e.g., one or more first load cells, strain gauges, etc.) disposed at the interface between the arm(s) of the reinforcement assembly and the first inlet casing portion, one or more second sensors 484 (e.g., one or more second load cells, strain gauges, etc.) disposed at an interface between the shaft and the thrust bearing (e.g., at the bearing pads), one or more third sensors 486 (e.g., one or more temperature sensors, thermocouples, etc.) proximate to the interface between the shaft and the thrust bearing, one or more actuators 488 (e.g., actuator 390, actuators 420 from FIGS. 5 and 6), or a combination thereof. In certain embodiments, the one or more actuators 488 may be hydraulic actuators and the controller may be communicatively coupled to the actuators 488 via one or more valve assemblies (not shown).

In certain embodiments, the controller 472 may receive first signal(s) from the one or more second sensors 484 indicative of load(s) between the shaft and the thrust bearing. For example, the first signal(s) may be indicative of a first load between the first outer axial surface 360 of the collar 305 of the shaft 60 and the first inner axial surface 366 of the bearing pads 314, as shown in FIG. 4. Additionally or alternatively, the first signal(s) may be indicative of a second load between the second outer axial surface 452 of the collar 305 and the second inner axial surface 454 of the bearing pads 314, as shown in FIG. 6. The controller 472 may determine a first estimated load and/or a second estimated load based on the received first signal(s) and instruct the one or more actuators 488 to extend or retract based on the estimated load being above or below threshold load value(s). For example, if the estimated load is above an upper threshold load value, the controller 472 may instruct the actuator 390 to drive the arm 392 to extend relative to the body of the reinforcement assembly, thereby driving the bearing housing portion toward the collar of the shaft in the direction 352. As a result, the stress distribution between the collar and the bearing pads may be substantially equalized. If the estimated load is below a lower threshold load value, the controller 472 may instruct the actuator 390 to drive the arm 392 to retract or enable the arm 392 to retract relative to the body of the reinforcement assembly.

By further example, if the first estimated load is above the upper threshold load value, the controller 472 may instruct the first actuator 422 to drive the arm 436 to extend relative to the body of the reinforcement assembly and concurrently instruct the second actuator 424 to drive the arm 438 to retract or enable the arm 438 to retract relative to the body, thereby driving the bearing housing portion toward the collar of the shaft in the direction 352. As a result, stress distribution between first outer axial surface 360 of the collar 305 and first inner axial surface 366 of the bearing pads 314 is substantially equalized about the circumferential axis 16, thereby reducing wear on the bearing pads 314.

Additionally, or alternatively, if the second estimated load is above the upper threshold load value, the controller 472 may instruct the first actuator 422 to drive the arm 436 to retract or enable the arm 436 to retract relative to the body of the reinforcement assembly and concurrently instruct the second actuator 424 to drive the arm 438 to extend relative to the body, thereby driving the bearing housing portion toward the collar of the shaft in the direction 260. As a result, stress distribution between the second outer axial surface 452 of the collar 305 of the shaft 60 and the second inner axial surface 454 of the bearing pads 314 is substantially equalized about the circumferential axis 16, thereby reducing wear on the bearing pads 314.

In certain embodiments, the controller 472 may receive second signal(s) from the one or more third sensors 486 indicative of temperature(s) at the interface between the shaft and the thrust bearing. For example, the second signal(s) may be indicative of a first temperature proximate to the first outer axial surface 360 of the collar 305 of the shaft 60 and the first inner axial surface 366 of the bearing pads 314. Additionally, or alternatively, the second signal(s) may be indicative of a second temperature proximate to the second outer axial surface 452 of the collar 305 and the second inner axial surface 454 of the bearing pads. The controller 472 may determine a first estimated temperature and/or a second estimated temperature based on the received second signal(s) and instruct the one or more actuators 488 to extend or retract based on the estimated temperature being above or below threshold temperature value(s). For example, if the estimated temperature is above an upper threshold temperature value, the controller 472 may instruct the actuator 390 to drive the arm 392 to extend relative to the body of the reinforcement assembly, thereby driving the bearing housing portion toward the collar of the shaft in the direction 352. As a result, the stress distribution between the collar and the bearing pads may be substantially equalized. If the estimated temperature is below a lower threshold temperature value, the controller 472 may instruct the actuator 390 to drive the arm 392 to retract or enable the arm 392 to retract relative to the body of the reinforcement assembly.

By further example, if the first estimated temperature is above the upper threshold temperature value, the controller 472 may instruct the first actuator 422 to drive the arm 436 to extend relative to the body of the reinforcement assembly and concurrently instruct the second actuator 424 to drive the arm 438 to retract or enable the arm 438 to retract relative to the body, thereby driving the bearing housing portion toward the collar of the shaft in the direction 352. As a result, stress distribution between first outer axial surface 360 of the collar 305 and first inner axial surface 366 of the bearing pads 314 is substantially equalized about the circumferential axis 16, thereby reducing wear on the bearing pads 314.

Additionally, or alternatively, if the second estimated temperature is above the upper threshold temperature value, the controller 472 may instruct the first actuator 422 to drive the arm 436 to retract or enable the arm 436 to retract relative to the body of the reinforcement assembly and concurrently instruct the second actuator 424 to drive the arm 438 to extend relative to the body, thereby driving the bearing housing portion toward the collar of the shaft in the direction 260. As a result, stress distribution between the second outer axial surface 452 of the collar 305 of the shaft 60 and the second inner axial surface 454 of the bearing pads 314 is substantially equalized about the circumferential axis 16, thereby reducing wear on the bearing pads 314.

In certain embodiments, the controller 474 may instruct the one or more actuators 420 to extend and/or retract based on the first signal(s) indicative of the load(s) between the shaft and the thrust bearing, the second signal(s) indicative of temperature(s) at an interface between the shaft and the thrust bearing, or a combination thereof. Additionally, or alternatively, the controller 474 may receive third signal(s) from the one or more first sensors 482 indicative of load(s) between the one or more arms of the reinforcement assembly and the first inlet casing portion. The third signal(s) may be used in a feedback control loop (e.g., proportional integral derivative (PID) control) to provide close-loop control of the load exerted by the arm(s) on the first inlet casing portion.

Technical effects of the disclosed embodiments include increasing a stiffness between a bearing housing (e.g., bearing housing portion) of a gas turbine system and an inlet casing (e.g., upper inlet casing portion) of the gas turbine system using a reinforcement assembly. The increase in stiffness results in increased load being transferred from the bearing housing to the inlet casing, thereby enhancing alignment between a thrust bearing and a collar of a shaft of the gas turbine system. The alignment between the collar of the shaft and the thrust bearing results in a decreased amount of wear of one or more bearing pads of the thrust bearing, resulting in a reduction of maintenance cost and downtime. Additional technical effects include using closed-loop control to adjust the amount of stiffness added by the reinforcement assembly. The adjustable stiffness enables the stiffness to be changed to account for operational variations of the gas turbine system. The use of closed-loop control enables the stiffness added by the reinforcement assembly to be adjusted without manually readjusting the stiffness.

The subject matter described in detail above may be defined by one or more clauses, as set forth below.

According to a first aspect, a system includes an inlet portion of a gas turbine system. The inlet portion includes an inlet casing. The inlet casing includes an inlet casing portion, i.e., a second inlet casing portion, and an additional inlet casing portion i.e., a first inlet casing portion, removably coupled to the inlet casing portion. The inlet portion also includes a bearing housing having a bearing housing portion disposed between the inlet casing portion and the additional inlet casing portion. The bearing housing portion is removably coupled to the inlet casing portion, and the bearing housing is configured to house a bearing configured to at least partially support a rotor. The inlet portion also includes a reinforcement assembly extending axially between a surface of the bearing housing portion and a surface of the additional inlet casing portion. The reinforcement assembly is configured to transfer a rotor axial load from the bearing housing portion to the additional inlet casing portion.

The system of the preceding clause and/or of any of the appended claims, wherein the reinforcement assembly includes: a body; and an arm movably coupled to the body, wherein an end portion of the arm is configured to abut the surface of the additional inlet casing portion.

The system of any preceding clause and/or of any of the appended claims, wherein the body is coupled to the bearing housing portion via one or more fasteners.

The system of any preceding clause and/or of any of the appended claims, wherein the body and the bearing housing portion form a single piece.

The system of any preceding clause and/or of any of the appended claims, wherein the body has a surface configured to abut the surface of the bearing housing portion.

The system of any preceding clause and/or of any of the appended claims, wherein the reinforcement assembly includes: a body; an actuator positioned at the body; and an arm coupled to the actuator, wherein the actuator is configured to drive the arm to extend relative to the body; wherein an end portion of the arm is configured to abut the surface of the additional inlet casing portion.

The system of any preceding clause and/or of any of the appended claims, wherein the actuator includes a hydraulic actuator, the bearing is configured to receive a lubricant, and the hydraulic actuator is configured to receive the lubricant.

The system of any preceding clause and/or of any of the appended claims, wherein the reinforcement assembly includes: an additional actuator positioned at the body; and an additional arm coupled to the additional actuator, wherein the additional actuator is configured to drive the additional arm to extend relative to the body; wherein an additional end portion of the additional arm is configured to abut an additional surface of the additional inlet casing portion.

The system of any preceding clause and/or of any of the appended claims, wherein the arm is configured to exert a load onto the surface of the additional inlet casing portion along a direction, the additional arm is configured to exert an additional load onto the additional surface of the additional inlet casing along an additional direction, and the direction and the additional direction oppose each other.

The system of any preceding clause and/or of any of the appended claims, including a controller having a memory and a processor, wherein the controller is configured to: receive a signal indicative of a load between the rotor and the bearing; and control the actuator based on the load.

The system of any preceding clause and/or of any of the appended claims, including a controller having a memory and a processor, wherein the controller is configured to: receive a signal indicative of a temperature at an interface between the bearing and the rotor; and control the actuator based on the temperature.

The system of any preceding clause and/or of any of the appended claims, wherein the additional inlet casing portion is disposed above the inlet casing portion.

According to a second aspect, a reinforcement assembly for an inlet portion of a gas turbine system includes a body portion configured to couple to a bearing housing portion of a bearing housing of the inlet portion. The bearing housing is configured to house a bearing, and the bearing is configured to at least partially support a rotor. The reinforcement assembly also includes an arm movably coupled to the body portion. The arm is configured to move relative to the body portion. The inlet portion includes an inlet casing. The inlet casing includes an inlet casing portion and an additional inlet casing portion removably coupled to the inlet casing portion. The body portion and the arm are configured to transfer a rotor axial load from the bearing housing portion to the additional inlet casing portion. The bearing housing portion is configured to be disposed between the inlet casing portion and the additional inlet casing portion.

The reinforcement assembly of the preceding clause and/or of any of the appended claims, wherein the body portion is configured to couple to the bearing housing portion via one or more fasteners.

The reinforcement assembly of any preceding clause and/or of any of the appended claims, wherein the body portion is integrally formed with the bearing housing portion.

The reinforcement assembly of any preceding clause and/or of any of the appended claims, wherein the body has a surface configured to abut a surface of the bearing housing portion.

The reinforcement assembly of any preceding clause and/or of any of the appended claims, including an actuator positioned at the body portion, wherein the actuator is configured to drive the arm to extend relative to the body portion.

The reinforcement assembly of any preceding clause and/or of any of the appended claims, wherein the actuator includes a hydraulic actuator.

According to a third aspect, a system includes a controller having a memory and a processor. The controller is configured to receive, via the processor, a signal indicative of a load between a bearing housing of an inlet portion of a gas turbine system and a rotor partially disposed within the bearing housing. The controller is also configured to control, via the processor, an actuator of a reinforcement assembly to drive an arm of the reinforcement assembly to extend based on the load. The inlet portion includes an inlet casing. The inlet casing includes an inlet casing portion and an additional inlet casing portion removably coupled to the inlet casing portion. The arm is movably coupled to a body of the reinforcement assembly. The body is configured to couple to a bearing housing portion of the bearing housing. The arm is configured to engage the additional inlet casing portion. The inlet casing is disposed about the bearing housing portion.

The system of the preceding clause and/or of any of the appended claims, including the inlet portion of the gas turbine system. The inlet portion includes the bearing housing having the bearing housing portion disposed between the inlet casing portion and the additional inlet casing portion. The bearing housing portion is removably coupled to the inlet casing portion. The bearing housing is configured to house a bearing configured to at least partially support the rotor. The inlet portion also includes the reinforcement assembly extending axially between a surface of the bearing housing portion and a surface of the additional inlet casing portion. The reinforcement assembly is configured to transfer a rotor axial load from the bearing housing portion to the additional inlet casing portion.

This written description uses examples to disclose the invention, including the best mode, and also to enable any person skilled in the art to practice the invention, including making and using any devices or systems and performing any incorporated methods. The scope of the invention as herein claimed is defined by the appended claims, and may include other examples that occur to those skilled in the art which are not explicitly lined out in the exemplary embodiments.

## Claims

1. A system, comprising:
an inlet portion (42) of a gas turbine system, the inlet portion comprising:
an inlet casing (110), comprising a first inlet casing portion (116) and a second inlet casing portion (118), wherein the first inlet casing portion is removably coupled to the second inlet casing portion;
the inlet portion further comprising a bearing housing (112) defining an axial direction (12) and comprising a bearing housing portion (152, 154) disposed between the second inlet casing portion and the first inlet casing portion, wherein the bearing housing portion (152, 154) is removably coupled to the second inlet casing portion (118), and the bearing housing is configured to house a bearing (158, 160) configured to at least partially support a rotor; and
a reinforcement assembly (114) extending axially between a surface of the bearing housing portion and a surface of the first inlet casing portion, wherein the reinforcement assembly is configured to transfer a rotor axial load from the bearing housing portion to the first inlet casing portion.

2. The system of claim 1, wherein the reinforcement assembly (114) comprises a body (200) and an arm (204) movably coupled to the body, wherein an end portion (208) of the arm is configured to abut the surface of the first inlet casing portion.

3. The system of claim 2, wherein the reinforcement assembly (114) comprises:
an actuator (390) positioned at the body (200) and
an arm (392) coupled to the actuator, wherein the actuator is configured to drive the arm to extend relative to the body.

4. The system of any of claims 2 or 3, wherein the actuator comprises a hydraulic actuator.

5. The system of claim 4, wherein the bearing (158, 160) is configured to receive a lubricant, and the hydraulic actuator is configured to receive lubricant (332) from the bearing, wherein said lubricant (332) received by the hydraulic actuator is in particular pressurized lubricant from the bearing.

6. The system of any of claims 3 through 5, wherein the reinforcement assembly (114) comprises:
an additional actuator (424) positioned at the body; and
an additional arm (438) coupled to the additional actuator, wherein the additional actuator is configured to drive the additional arm to extend relative to the body;
wherein an additional end portion (444) of the additional arm is configured to abut an additional surface (448) of the first inlet casing portion (116).

7. The system of claim 6, wherein the arm (436) is configured to exert a load onto the surface (172) of the first inlet casing portion (116) along a direction, the additional arm (438) is configured to exert an additional load onto the additional surface (448) of the first inlet casing portion along an additional direction, and the direction and the additional direction oppose each other.

8. The system of any of claims 3 through 7, comprising a controller (472) comprising a memory (474) and a processor (478), wherein the controller is configured to receive a signal indicative of a load between the rotor and the bearing; and control the actuator (390) based on the load.

9. The system of any of claims 3 through 8, comprising a controller (472) comprising a memory (474) and a processor (478), wherein the controller is configured to:
receive a signal indicative of a temperature at an interface between the bearing and the rotor; and
control the actuator (390) based on the temperature.

10. The system of any of claims 2 through 9, wherein the body (200) is coupled to the bearing housing portion (152, 154) via one or more fasteners (274).

11. The system of any of claims 2 through 10, wherein the body (200) and the bearing housing portion (152, 154) form an integrally formed single piece.

12. The system of any of claims 2 through 11, wherein the body (200) has a surface configured to abut the surface of the bearing housing portion.

13. The system of any preceding claim, wherein the first inlet casing portion (116) is disposed above the second inlet casing portion (118).

14. A reinforcement assembly (114) for a system according to any preceding claim, comprising:
a body portion (200) configured to couple to a bearing housing portion of a bearing housing of the inlet portion, and
an arm (392) movably coupled to the body portion, wherein the arm is configured to move relative to the body portion;
wherein the body portion and the arm are configured to transfer a rotor axial load from the bearing housing portion to the first inlet casing portion.

15. A system, comprising:
a controller (472) comprising a memory (474) and a processor (478), wherein the controller is configured to:
receive, via the processor, a signal indicative of a load between a bearing housing (112) of an inlet portion (42) of a gas turbine system and a rotor partially disposed within the bearing housing; and
control, via the processor, an actuator (390) of a reinforcement assembly (114) to drive an arm (392) of the reinforcement assembly to extend based on the load;
wherein the inlet portion (42) comprises an inlet casing (110), comprising:
a first inlet casing portion (116) and a second inlet casing portion (118), wherein the first inlet casing portion is removably coupled to the second inlet casing portion;
wherein the arm (392) is movably coupled to a body (200) of the reinforcement assembly, the body is configured to couple to a bearing housing portion (152, 154) of the bearing housing, the arm is configured to engage the first inlet casing portion, and the inlet casing is disposed about the bearing housing portion.
